# EUROPEAN PATENT SPECIFICATION

(11) **EP 1 051 352 B1**
(45) Date of publication and mention of the grant of the patent: **07.05.2003**
(21) Application number: 99907528.6
(22) Date of filing: 04.02.1999
(51) Int. Cl.: C01B 15/023

(54) **PROCESS FOR THE MANUFACTURE OF HYDROGEN PEROXIDE**
VERFAHREN ZUR HERSTELLUNG VON WASSERSTOFFPEROXYD
PROCEDE DE FABRICATION DU PEROXYDE D'HYDROGENE

(30) Priority: 04.02.1998 GB 9802405
(43) Date of publication of application: 15.11.2000
(73) Proprietor: SOLVAY (Société Anonyme), 1050 Bruxelles (BE)
(72) Inventor: VANDENBERG, Dominique, B-1332 Rixensart (BE); GANHY, Jean-Pierre, B-1170 Bruxelles (BE); VANLAUTEM, Noel, B-1300 Wavre (BE)
(74) Representative: Vande Gucht, Anne
(86) International application number: EP9900850
(87) International publication number: WO99040024

(56) References cited:
- EP-A- 0 384 905
- EP-A- 0 672 617
- WO-A-96/18574
- GB-A- 760 737
- G. GOOR, W. KUNKEL, O. WEIBERG (ED. : B. ELVERS ET.AL): ULLMANN'S ENCYCLOPEDIA OF INDUSTRIAL CHEMISTRY, vol. A13, 1989, pages 447-457, XP002002459

## Description

The invention relates to a process for the manufacture of hydrogen peroxide by the so-called anthraquinone process, and in particular the invention relates to the improvement of an essential process step of said anthraquinone process, i.e. the hydrogenation step.

Hydrogen peroxide is typically produced using a two-stage cyclical anthraquinone process (AO-process). This AO-process utilizes alkylanthraquinone compounds, such as 2-ethylanthraquinone, 2-amylanthraquinone, and their 5,6,7,8-tetrahydro derivatives as the working compounds dissolved in a suitable organic solvent or mixture of organic solvents. These solutions of alkylanthraquinones are referred to as working solutions. In the first stage of the anthraquinone process (hydrogenation step), the working solution is sujected to hydrogenation in order to reduce the working compounds to their hydrogenated form, the alkylhydroanhtraquinones. The hydrogenation of the working compounds is accomplished by mixing hydrogen gas with the working solution and contacting the resulting solution with an appropriate hydrogenation catalyst. In the second stage of the two-stage AO-process (oxidation step), the hydrogenated working compounds, i.e. the alkylhydroanhtraquinones, are oxidized using oxygen, air, or a suitable oxygen containing compound in order to produce hydrogen peroxide and restore the working compound to its original form. The hydrogen peroxide produced in the oxidation step is then removed from the working solution, typically by extraction with water, and the remaining working solution containing the alkylanthraquinones is recycled to the hydrogenation step to again commence the process.

The hydrogenation step may be carried out in the presence of a fluid-bed catalyst or a fixed-bed catalyst. Either method is known to have its particular advantages and disadvantages.

In a fluid-bed hydrogenation reactor, good contact between the three reacting phases are obtained and thus the productivity and selectivity are generally high. However, the catalyst particles can be broken down by abrasion and can block the filters needed to separate the suspended catalyst and the hydrogenated working solution. This kind of reactor is also subject to back-mixing. So, the use of suspended catalyst frequently requires the use of a larger hydrogenation reactor and expensive filtration sector to obtain a fully-hydrogenated form.

The fixed-bed hydrogenation reactor does not abrade the catalyst and, if operated in a concurrrent flow, does not result in back-mixing. But the reaction rate of a fixed-bed hydrogenation reactor is limited by the relatively slow rate of dissolution of hydrogen from the gas phase into the working solution. Therefore, to dissolve the required quantity of hydrogen necessary to thoroughly reduce all of the working compounds, the working solution has to be recycled several times. Thus, a very large recycle stream and a correspondingly large hydrogenation reactor is required, and thus adding to the capital costs of the process. In addition, the recycling of the hydrogenated solution results in over-hydrogenation of the working compounds so that they are ineffective in the overall process.

A special kind of fixed-bed reactors are the so-called trickle-bed reactors which are generally known in the literature (see e.g. NG K.M. and CHU C.F. - Chemical Engineering Progress, 1987, 83 (11), p. 55-63). Although the trickle-bed reactors are primarily used in the petroleum industry for hydrocracking, hydrodesulfurization, and hydrodenitrogenation, and in the petrochemical industry for hydrogenation and oxidation of organic compounds, nevertheless, the trickle-bed hydrogenation reactor is also found in some versions of the AO-process for the manufacture of hydrogen peroxide. The term trickle-bed is used here to mean a reactor in which a liquid phase and a gaseous phase flow concurrently downward through a fixed bed of catalyst particles while the reaction takes place. Current practice in operating the trickle-bed reactor still relies mainly on empirical correlations and obviously parameters such like pressure drop, dispersion coefficients, and heat and mass transfer coefficients depend on both, gas and liquid flow rates. From the literature it is also known to operate trickle-bed reactors under different flow patterns such like "trickling", "pulsing", "spray", "bubble" and "dispersed bubble". One of the major problems in the use of the trickle-bed, especially in the trickle-flow regime, is the possibility of channeling in the fixed-bed hydrogenation reactor.

In Chemical Abstracts no. 19167 f - h, volume 55 (Japanese patent no. 60-4121) the manufacture of hydrogen peroxide is described, in which process a mixture of an alkylanthraquinone solution with great excess of hydrogen or hydrogen containing gas is foamed by passing this mixture through a porous diffuser in the upper part of a column containing a granular hydrogenation catalyst The foamed mixture is then passed rapidly through the catalyst layer to hydrogenate. At the bottom of the column a bed consisting of glass wool, rock wool, a metal screen, or a filter cloth is placed for defoaming, and the defoamed working solution is withdrawn from the bottom and the great excess of separated gas is recycled to the column. Although by this process the possibility of channeling in a fixed-bed hydrogenation reactor in the trickle-flow regime is eliminated, according to the reference made to the Japanese patent in US 4,428,922 (column 1, lines 55 to 68) there are still some drawbacks left, like high pressure-drop, the increase of energy consumption related thereto, a large recycle stream of hydrogen back through the hydrogenation reactor, and the use of additional equipment required for foaming and defoaming the working solution. In addition the through-put or productivity of the hydrogenation reactor is drastically reduced because of the large volume occupied by the excess hydrogen gas.

The invention is aimed to overcome the disadvantages of the known processes and to provide a simplified and advantageous process for the manufacture of hydrogen peroxide by the means of an AO-process using a fixed bed of catalyst particles in the hydrogenation step with high productivities.

The object of the present invention is achieved by a process for the manufacture of hydrogen peroxide by the AO-process comprising the alternate steps of hydrogenation and oxidation of a working solution containing at least one alkylanthraquinone dissolved in at least one organic solvent and extracting the hydrogen peroxide formed in the oxidation step, in which process the hydrogenation step is carried out in a hydrogenation reactor containing a fixed bed of the hydrogenation catalyst particles by feeding a concurrent flow of the working solution and a hydrogenating gas at the top of the column just by means of a conventional inlet pipe and by adjusting the ratio of liquid and gas feed-flows and the pressure of the hydrogenating gas to provide a self-foaming mixture of the working solution and the hydrogenating gas in the absence of any device or diffuser or spray nozzle for forming the foam, and by subsequently passing the foaming mixture downwards through the fixed bed of catalyst particles, the input superficial velocity of the liquid being not higher than 2,5 cm/s.

The process of the invention may be carried out optionally batch-wise or in a continuous manner. In addition, the hydrogenation step of the process may be carried out optionally under a pulsing foam flow regime of the working solution through the fixed-bed catalyst.

Hence, according to the present invention it is surprisingly found that it is possible to carry out the hydrogenation step of the AO-process directly in a conventional hydrogenation reactor of trickle-bed type under foaming of the working solution and the hydrogenating gas without any additional special equipment for the generation of the foam. Thus the working solution and the hydrogenating gas can directly be fed into the hydrogenation reactor just by means of a conventional inlet pipe and the foaming is then achieved by adjusting the liquid and gas feed-flows and pressure of the hydrogenating gas. In addition there is no need to provide any special equipment at the bottom of the hydrogenation reactor for defoaming.

The hydrogenation reactor containing the stationary trickle-bed employed in the process according to the invention is of conventional type and may take all forms and sizes generally encountered for the production of hydrogenation reactors of this type. Preferably the hydrogenation reactor is a tubular reactor (column).

There are several advantages related to the use of a foaming working solution in the hydogenation step of the AO-process for the manufacture of hydrogen peroxide.The gas/liquid mass transfer is significantly increased because of the nature of the foam which consists of a dense dispersion of the hydrogenating gas in the liquid working solution. A good distribution of the working solution and the hydrogenating gas is maintained over the total length of the hydrogenation reactor. Consequently, for example the liquid surface velocity of a foaming working solution necessary to achieve a good contact efficiency is approximately up to 2 to 3 times lower than that required for a non-foaming working solution. Thus, for foaming of the mixture of working solution and hydrogenating gas, the conditions in the hydrogenation reactor concerning the liquid and gas feed-flows and the pressure of the hydrogenating gas are set to provide a significant interaction of liquid (L) and hydrogenating gas (G); under these conditions the foam flow regime may be located between the trickle-flow and the pulsing flow regime. Accordingly, in the process of the invention the pressure of the hydrogenating gas is in the range of 1.1 to 15 bar (absolute), preferably in the range of 1.8 to 5 bar (absolute). The input superficial velocity of the hydrogen is usually at least 2.5 cm/s, preferably at least 3 cm/s. The input superficial velocity of the hydrogen is generally not higher than 25 cm/s, preferably not higher than 10 cm/s. The input superficial velocity of the liquid into the reactor is generally at least 0.25 cm/s, preferably at least 0.3 cm/s. The input superficial velocity of the liquid is generally not higher than 1.5 cm/s, and more preferably, not higher than 1 cm/s.

The characteristics of the further preferred embodiments of the inventive hydrogenation of the working solution under foaming conditions and specific conditions related thereto are now described in more detail. In a preferred embodiment of the invention the process is characterized in that the liquid and gas feed-flows and the pressure of the hydrogenating gas are adjusted in order to pass the foaming mixture of the working solution and the hydrogenating gas in the hydrogenation reactor downwards through the fixed-bed catalyst with a liquid surface velocity lower than the gas surface velocity through the fixed catalyst bed. In particular the liquid surface velocity'is approximately at least 0.25 cm/s and, preferably, is at least 0.3 cm/s. In particular the liquid surface velocity is approximately not higher than 1.5 cm/s, more preferably not higher than 1 cm/s. Furthermore it is advantageous in the process of the invention to adjust the surface velocity of the hydrogenating gas to approximately at least 2.5 cm/s and, preferably to at least 3 cm/s. The surface velocity of the hydrogenating gas will not be higher than 10 cm/s.

In a further preferred embodiment of the process according to the invention it is desirable that the liquid and gas feed-flows and the pressure of the hydrogenating gas are adjusted in order to provide a liquid/gas-ratio ("L/G-ratio") of at least 0.45/10 and, preferably, of at least 0.6/10. In a further preferred embodiment of the process according to the invention it is desirable that the liquid and gas feed-flows and the pressure of the hydrogenating gas are adjusted in order to provide a liquid/gas-ratio ("L/G-ratio") not higher than 3.5/10, and, preferably, not higher than 1.5/10.

In another preferred embodiment of the process according to the invention, additional gas is introduced along the reactor at one or more inlet points in order to improve the control of the temperature and the performances of the reactor. In that case, the liquid/gas-ratio has to be adjusted as explained above for each gas introduction.

The hydrogenating gas in the process according to the invention can be hydrogen or the hydrogen may be diluted in an inert gas. The term inert gas is intended to denote a gas which does not react with the working solution including the alkylanthraquinone, nor with the hydrogenation catalyst or the alkylhydroanthraquinone produced. Examples of this inert gases are in particular rare gases, carbon dioxide, fluorinated gases such as HFA and nitrogen. Nitrogen has given good results. Therefore, an advantageous embodiment of the invention is characterized in that as the hydrogen containing gas a mixture of hydrogen and of inert gas is used, preferably a mixture of hydrogen and nitrogen. The proportion of inert gas in the hydrogen containing gas mixture will usually be in range of from about 0.5 to 99 % and preferably, in the range of from about 10 to 40 %. By the dilution of hydrogen with an inert gas (rare gaz, nitrogen, carbon dioxide, fluorinated gas) the stability of the foam of the working solution and the hydrogen gas may be considerably improved, thus making it easier to control the hydrogention, i.e. the feeding of working solution and the required amount of hydrogen, as well as the gas pressure. Thus, the risk of foam breakdown, while the foaming working solution is passing through the catalyst bed and concomitantly the hydrogen consumption is taking place, is minimized in the hydrogenation reactor. In addition, in the presence of an inert gas an enhanced stability of the catalytic activity is surprisingly observed. Furthermore the presence of an inert gas is advantageous in view of the possibility to recirculate some gas. The recirculation of some gas may be desirable in order to guarentee a good and proper working of the pumping systems involved in the process for supplying the hydrogenating gas to the hydrogenation reactor. Although, the use of an inert gas for the dilution of hydrogen is described here in the context of the inventive foaming flow regime of the working solution in a trickle-bed hydrogenation reactor, it is believed that inert gases may be advantageously used for the dilution of hydrogen also under other flow patterns, e.g. such like those already mentioned above: "trickling", "pulsing", "spray", "bubble" and "dispersed bubble".

The temperature prevailing in the hydrogenation reactor will be regulated to optimise the selectivity and the productivity in relation to the hydrogenation of the working solution. The temperature will usually be in the range of from about 20 °C (ambiant) to 100 °C. In a preferred embodiment of the process according to the invention, the hydrogenation step is carried out at a temperature in the range of about 45 to 75 °C.

In carrying out the present invention a working solution containing an anthraquinone working compound is dissolved in a suitable organic solvent. Working compounds that can be used in the process of the invention are those anthraquinones, in particular alkylantraquinones, and mixtures thereof conventially used for the manufacture of hydrogen peroxide by the AO-process. Suitable anthraquinones are 2-alkylanthraquinones and include for example 2-ethylanthraquinone, 2-isopropylanthraquinone, 2-n-butylanthraquinone, 2-sec butylanthraquinone, 2-tert-butylanthraquinone, 2-amylanthraquinone, 2-sec amylanthraquinone, 2-tert-amylanthraquinone or mixtures thereof as well as the 2-alkyl-5,6,7,8-tetrahydroanthraquinones and their mixtures with the corresponding 2-alkylanthraquinones. The organic solvents that can be used in the process of the invention are those solvents and mixtures thereof conventially used in the manufacture of hydrogen peroxide by the AO-process. In particular, solvent mixtures of two or more solvents are used which are equally suitable for the different dissolution properties of quinones. Thus, usually mixtures of nonpolar aromatic solvents (quinone solvents) and polar solvents (hydroquinone solvents) are used in the manufacture of hydrogen peroxide by the AO-process. Examples of suitable aromatic solvents include alkyl-substituted aromatics, particularly C8 and C12 alkyl benzenes or mixtures thereof. Examples of suitable polar solvents include higher alcohols (e.g. diisobutylcarbinol or 2-octanol), alkylated and arylated urea, phosphoric acid esters (e.g. trioctyl phosphate), 2-pyrrolidone, 2-methylcyclohexyl acetate or mixtures thereof. Examples of suitable solvent mixtures include mixtures of C10 alkyl aromatics with diisobutylcarbinol or with 2-methylcyclohexyl acetate. Generally the working solution contains from 2 to 40 % by wt of the anthraquinone or the mixture thereof.

According to the invention, the stationary trickle-bed consists of a packing of solid hydrogenation catalyst particles. It is generally desirable that the average diameter of these particles should be in the range of from about 0.2 to 10 mm. In a preferred embodiment of the process according to the invention the catalyst granules in the fixed bed have an average particle diameter of from 1 to 5 mm. There are no special requirements concerning the shape of the catalyst particles and therefore the particles may be round, grains or even pellets of indeterminate shape. Generally the catalyst particles consist of a porous carrier such like aluminium oxide, titanium oxide, zirconium oxide, silica gel or activated carbon or organic polymers or mixtures of these oxides or mixtures of organic polymers, and of a catalytic metal, usually such like rhodium, palladium, platinium or rhenium, which catalytic metal is deposited on or adsorbed to the surface of the carrier. The quantity of catalytic metal is advantageously below 10 % of the total weight of the catalyst.

In a preferred embodiment of the process according to the invention, the catalytic metal is deposited or absorbed on a silica-alumina carrier. The use of a silica-alumina carrier for the catalytic metal used in AO-processes gives a surprisingly increased hydrogen peroxide specific production when compared to the use of carriers made of silica or alumina alone. This is especially the case for the AO-process according to the invention, i.e. using a foaming flow regime of the working solution in.a trickle-bed hydrogenation reactor. But it is believed that a similar increase in hydrogen peroxide specific production may be observed when using silica-alumina carriers in other AO-processes using a trickle-bed reactor, like a dispersed-bubble reactor for instance. The same improvement could even be reached with all types of fixed bed reactors used in AO-processes, when using a silica-alumina carrier for the catalytic metal.

The inventive trickle-bed process under foam-flow regime has the following surprising advantages, especially if compared to the trickle-bed process under the conventional trickle-flow regime. It has been found that the process of the invention shows good productivity and operates with high selectivity. As shown in the examples in comparison to a trickle-flow regime, the productivity of hydrogen peroxide is at least 5 to approximately 6 times higher, if the inventive foam-flow regime is applied in the hydrogenation step. In contrast to the trickle-flow regime, no over-hydrogenation takes place in the hydrogenation step under the inventive foam-flow regime, thus showing the high selectivity of the inventive process. Furthermore, as already stated above, the inventive foam-flow regime can easily be accomplished directly in a conventional hydrogenation reactor of trickle-bed type without any special equipment for foaming, nor there is any need for a special defoaming equipment at the bottom of the hydrogenation reactor. Thus the process of the invention may be carried out with a much more simplified equiment than e.g. the process described in the Chemical Abstracts no. 19167 f - h, volume 55 (Japanese patent no. 60-4121), which requires a diffuser for foaming at the top of the reactor and a bed consisting of glass wool, rock wool, a metal screen, or a filter cloth at the bottom of the reactor for defoaming. According to the invention it is advantageous that there is no need of such equipments which may cause undesired additional pressure drop and thus contribute to energy consumption. In contrast to the state of the art, according to the invention no separate dissolution and foaming of the hydrogenating gas in the working solution is required in advance to the feeding into the hydrogenation reactor, nor there is any need of recycling the working solution in the hydrogenation step in order to achieve a sufficient hydrogenation of the anthraquinones. This is an important advantage with respect to the catalyst, because excess liquid phase on the catalyst leads to rapid deactivation of the catalyst and a higher rate of recirulation is detrimental to the selectivity and the mechanical resistance of the catalyst bed. Furthermore, the foaming of the working solution is achieved without undue energy consumption, because the still relatively slow liquid flow or the still relatively low liquid surface velocities in the range of 0.3 to 0.7 cm/s are already sufficient to properly pass the foaming working solution downwards through the fixed-bed catalyst contained in the hydrogenation reactor. There are no special requirements with respect to the size and the shape of the catalyst, e.g. a conventional bed of catalyst particles may be used.

The examples which follow are given to illustrate the invention, without, however, limiting its scope.

### Examples

### Examples 1 to 5 (according to the invention) and 1R and 2R (not according to the invention): Determination of productivity

A synthetic anthraquinone working solution was made up from 2-amylanthraquinones and an aromatic hydrocarbon and an organic alcohol compound. The concentration of the amylanthraquinone in the working solution was 200 g/kg. Additionally the working solution was saturated with water.

The fixed bed of the catalyst in the hydrogenation reactor was composed of particles with an average particle diameter of 2.3 mm; the particles consisted of a silicium dioxide carrier and 0.5 % by wt of Pd as the catalytic metal deposited on the carrier.

The hydrogenation was carried out in a conventional hydrogenation reactor. The internal diameter was 25.4 mm and the volume of the catalyst bed was 0.5 l.

The hydrogenation reactor was piped at the top so that the working solution and the hydrogenating gas could be directly fed into the top of the hydrogenation reactor column. The feed flow of the working solution was adjusted in the range of 89 to 222 ml/min (foam flow regime) and for comparative purpose at 56 ml/min (still trickle-flow). The gas feed flow was about 1000 mlN/min (ml N = ml calculated at atmospheric pressure and ambiant temperature) and the gas pressure was 2.2 bar (abs.), each at the entrance of the hydrogenation reactor column. The foaming appeared shortly after the mixture of the working solution and the hydrogenating gas had entered at the top of the hydrogenation reactor column and passed some centimeters of its way downwards through the column.

The foaming mixture of the working solution and the hydrogenating gas was passed from the top of the hydrogenation reactor downwards through the fixed-bed catalyst to the bottom of the hydrogenation reactor at a temperature of 55 °C.

Table I shows the productivity data found in relation to the feed flow and surface velocity of the working solution.

The productivity of the hydrogenation process was determined by the measurement of the equivalent weight of hydrogen peroxide produced per hour and per kilogram of catalyst (g H₂O₂/h*kg catalyst) or per liter of catalyst (g H₂O₂/h*1 catalyst).

**Table I**

| Results for specific productivity | | | | |
|---|---|---|---|---|
| No. | Feed Flow Working Solution (ml/min) | Surface Velocity Working Solution(cm/s) | Flow Regime | Specific Productivity (g H₂O₂/h*kg cat.) |
| 1R | 15 | 0.05 | trickle | 34 |
| 2R | 56 | 0.18 | trickle | 51 |
| 1 | 89 | 0.29 | foam | 145 |
| 2 | 111 | 0.36 | foam | 158 |
| 3 | 140 | 0.46 | foam | 162 |
| 4 | 170 | 0.56 | foam | 173 |
| 5 | 222 | 0.70 | foam | 195 |

### Examples 6 (according to the invention) and 6R (not according to the invention): Determination of selectivity

The process was carried out continuously. The hydrogenation step was carried out in a manner analogous to examples 1 to 5. The resulting hydrogenated working solution was recovered from the bottom of the hydrogenation reactor and pumped into an oxidizing vessel where it was oxidized by passing air through the working solution (atmospheric pressure, temperature of about 45 °C) until oxidation of the solution was complete. The oxidized working solution was removed from the oxidizer and passed into an extraction unit wherein the hydrogen peroxide formed was extracted with water from the working solution. The organic phase remaining after the extraction and separation from the water phase was made up essentially of the working solution and could optionally be recycled to the hydrogenation step. The water phase contained most of the hydrogen peroxide. The particular conditions are given in the following Table II.

**Table II**

| Working conditions | | |
|---|---|---|
| Characteristics | No. 6R (non-inventive) Trickle-Flow Regime | No. 6 (invention) Foam-Flow Regime |
| Hydrogenation Column: | | |
| - Internal Diameter (mm) | 20 | 25.4 |
| Working Solution: | | |
| - Surface Velocity (cm/s) | 0.05 | 0.36 |
| Hydrogen: | | |
| - Pressure (bar, absolute) | 2.0 | 2.0 |
| - Feed Flow: | | |
| - Surface velocity (cm/s) | 1.4 | 3.3 |
| Catalyst Volume (ml) | 200 | 650 |
| Pressure Drop (bar) | < 0.05 | 0.6 |

The productivity, calculated in g H₂O₂ produced per hour and per kg of catalyst, was 34 g/h*kg cata for the trickle-flow regime and 198 g/h*kg cata for the foam-flow regime.

The loss of useful anthraquinone per amount of H₂O₂ produced was 15 g/kg H₂O₂ in the case of the trickle-flow regime and << 1 g/kg H₂O₂ (close to zero) for the foam-flow regime.

It is appearent from the results that the foam flow regime is favourable for the productivity of hydrogen peroxide and for the selectivity of the hydrogenation of the anthraquinones. The increased mass transfer is accompanied by an important improvement of the specific productivity of about 5 to 6 times. Although the rate of hydrogenation is very high, no degradation by over-hydrogenation was observed during the total duration of the inventive foam flow regime.

### Example 7 (according to the invention): Comparison of the foam flow regime and the trickle-flow regime

Small-scale experiments were carried out in the same reactor as that used for examples 1 to 5, but proceeding with another catalyst.

For these experiments, the fixed bed of catalyst was made of particles with an average particle diameter of 1.0 mm. The particles consisted of silica carrier and 0.5 % by weight of Pd as the catalytic metal deposited on it.

The superficial velocity of the liquid phase was increased from 0.05 to 0.66 cm/s and the specific production of hydrogen peroxide was increased from 72 to 365 g H₂O₂/h*kg cata. The ratio of the liquid feed flow to the gas feed flow was 1.8/10 for the foam flow regime.

### Example 8 (according to the invention): Use of a silica-alumina carrier

Other experiments were carried out in the same reactor as the one used for example 7, except that the catalyst consists in Pd deposited on a silica-alumina carrier. For these experiments, the fixed bed of catalyst was made of particles with an average diameter of 2.0 mm.

When the superficial velocity of the liquid phase was 0.85 cm/s and the G/L ratio was 10/0.9, the specific production of the reactor was 450 g hydrogen peroxide/h * hg cata.

## Claims

1. A process for the manufacture of hydrogen peroxide by the AO-process comprising the alternate steps of hydrogenation and oxidation of a working solution containing at least one alkylanthraquinone dissolved in at least one organic solvent and extracting the hydrogen peroxide formed in the oxidation step, wherein the hydrogenation step is carried out in a hydrogenation reactor containing a fixed bed of the hydrogenation catalyst particles by feeding a concurrent flow of the working solution and a hydrogenating gas at the top of the column just by means of a conventional inlet pipe and by adjusting the ratio of liquid and gas feed-flows and the pressure of the hydrogenating gas to provide a self-foaming mixture of the working solution and the hydrogenating gas in the absence of any device or diffuser or spray nozzle for forming the foam, and by subsequently passing the foaming mixture downwards through the fixed bed of catalyst particles, the input superficial velocity of the liquid being not higher than 2.5 cm/s.

2. Process according to claim 1, wherein the pressure of the hydrogenating gas is in the range of 1.1 to 15 bar (absolute), preferably in the range of 1.8 to 5 bar (absolute).

3. Process according to claim 1 or 2, wherein the liquid surface velocity is at least 0.25 cm/s, preferably in the range of 0.3 to 1.5 cm/s.

4. Process according to any of the preceding claims, wherein the gas surface velocity is at least 2.5 cm/s, preferably in the range of 3 to 10 cm/s.

5. Process according to any of the preceding claims, wherein the liquid and gas feed-flows and the pressure of the hydrogenating gas are adjusted in order to provide a liquid/gas-ratio ("L/G-ratio") of at least 0.45/10 and preferably, of at least 0.6/10.

6. Process according to claim 5, wherein the liquid and gas feed-flows and the pressure of the hydrogenating gas are adjusted in order to provide a liquid/gas-ratio is not higher than 3.5/10, preferably not higher than 1.5/10.

7. Process according to any of the preceding claims, wherein additional gas is introduced along the reactor at one or more inlet points.

8. Process according to any of the preceding claims, wherein the hydrogen containing gas is a mixture of hydrogen and of an inert gas such as nitrogen, rare gas, carbone dioxide or fluorinated gas.

9. Process according to any of the preceding claims, wherein the hydrogenation step is carried out at a temperature in the range of about 20 to 100°C.

10. Process according to any of the preceding claims, wherein the catalyst granules in the fixed bed have a particle diameter of from 0.2 to 10 mm, preferably of from 1 to 5 mm.

11. A process for the manufacture of hydrogen peroxide by the AO-process using a fixed-bed reactor and a catalyst consisting of a catalytic metal deposited or absorbed on a carrier, wherein the carrier is a silica-alumina carrier.

## Patentansprüche

1. Verfahren zur Herstellung von Wasserstoffperoxid nach dem AO-Verfahren, umfassend die alternierenden Stufen von Hydrierung und Oxidation einer Arbeitslösung, die wenigstens ein in wenigstens einem organisches Lösungsmittel aufgelöstes Alkylanthrachinon enthält, und ein Extrahieren des in der Oxidationsstufe gebildeten Wasserstoffperoxids, wobei die Hydrierstufe in einem Hydrierreaktor ausgeführt wird, der ein Festbett aus Hydrierkatalysatorteilchen enthält, durch Zuführen eines Gleichstroms aus der Arbeitslösung und einem Hydriergas am Kopf der Kolonne bloß mittels eines konventionellen Einlaßrohrs und durch Einstellen des Verhältnisses von Flüssigkeits- und Gasspeiseströmen und des Drucks des Hydriergases zur Ausbildung eines selbstschäumenden Gemisches aus der Arbeitslösung und dem Hydriergas in Abwesenheit jeglicher Vorrichtung oder eines Diffuseurs oder einer Sprühdose zur Schaumbildung, und wobei anschließend das schäumende Gemisch nach unten durch das Festbett aus Katalysatorteilchen geführt wird, wobei die Eingangsoberflächengeschwindigkeit der Flüssigkeit nicht über 2,5 cm/s liegt.

2. Verfahren nach Anspruch 1, worin der Druck des Hydriergases im Bereich von 1,1 bis 15 bar (absolut), vorzugsweise im Bereich von 1,8 bis 5 bar (absolut) liegt.

3. Verfahren nach Anspruch 1 oder 2, worin die Flüssigkeitsoberflächengeschwindigkeit wenigstens 0,25 cm/s beträgt und vorzugsweise im Bereich von 0,3 bis 1,5 cm/s liegt.

4. Verfahren nach einem der vorstehenden Ansprüche, worin die Gasoberflächengeschwindigkeit wenigstens 2,5 cm/s beträgt und vorzugsweise im Bereich von 3 bis 10 cm/s liegt.

5. Verfahren nach einem der vorstehenden Ansprüche, worin die Flüssigkeits- und Gasspeiseströme und der Druck des Hydriergases derart eingestellt werden, daß ein Flüssigkeits/Gas-Verhältnis ("L/G-Verhältnis") von wenigstens 0,45/10 und vorzugsweise von wenigstens 0,6/10 erhalten wird.

6. Verfahren nach Anspruch 5, worin die Flüssigkeits- und Gasspeiseströme und der Druck des Hydriergases derart eingestellt werden, daß ein Flüssigkeits/Gas-Verhältnis von nicht über 3,5/10, vorzugsweise nicht über 1,5/10 erhalten wird.

7. Verfahren nach einem der vorstehenden Ansprüche, worin an einem oder an mehreren Einlaßpunkten entlang des Reaktors ein zusätzliches Gas eingeführt wird.

8. Verfahren nach einem der vorstehenden Ansprüche, worin das wasserstoffhältige Gas ein Gemisch aus Wasserstoff und aus einem inerten Gas wie Stickstoff, Edelgas, Kohlendioxid oder fluoriertem Gas ist.

9. Verfahren nach einem der vorstehenden Ansprüche, worin die Hydrierstufe bei einer Temperatur im Bereich von etwa 20 bis 100°C ausgeführt wird.

10. Verfahren nach einem der vorstehenden Ansprüche, worin die Katalysatorgranulate in dem Festbett einen Teilchendurchmesser von 0,2 bis 10 mm, vorzugsweise von 1 bis 5 mm aufweisen.

11. Verfahren zur Herstellung von Wasserstoffperoxid nach dem AO-Verfahren unter Anwendung eines Festbettreaktors und eines Katalysators, der aus einem auf einem Träger abgelagerten oder absorbierten katalytischen Metall besteht, worin der Träger ein Siliciumoxid/Aluminiumoxidträger ist.

## Revendications

1. Procédé de fabrication du peroxyde d'oxygène à l'aide du procédé AO, comprenant les étapes alternées d'hydrogénation et d'oxydation d'une solution de travail contenant au moins une alkylanthraquinone dissoute dans au moins un solvant organique et l'extraction du peroxyde d'hydrogène formé dans l'étape d'oxydation, dans lequel l'étape d'hydrogénation est effectuée dans un réacteur d'hydrogénation contenant un lit fixe de particules de catalyseur d'hydrogénation en y introduisant un courant simultané de la solution de travail et d'un gaz d'hydrogénation au sommet de la colonne simplement au moyen d'un tuyau d'amené classique et en ajustant le rapport des débits d'alimentation en liquide et en gaz et la pression du gaz d'hydrogénation afin de fournir un mélange auto-moussant de la solution de travail et du gaz d'hydrogénation en l'absence de tout dispositif ou diffuseur ou buse de pulvérisation pour former la mousse, et en faisant passer par la suite le mélange moussant vers le bas, au travers du lit fixe de particules de catalyseur, la vitesse superficielle d'entrée du liquide n'étant pas supérieure à 2,5 cm/s.

2. Procédé selon la revendication 1, dans lequel la pression du gaz d'hydrogénation est dans la plage de 1,1 à 15 bars (absolus), de préférence dans la plage de 1,8 à 5 bars (absolus).

3. Procédé selon la revendication 1 ou 2, dans lequel la vitesse superficielle du liquide est d'au moins 0,25 cm/s, de préférence dans la plage de 0,3 à 1,5 cm/s.

4. Procédé selon l'une quelconque des revendications précédentes, dans lequel la vitesse superficielle du gaz est d'au moins 2,5 cm/s, de préférence dans la plage de 3 à 10 cm/s.

5. Procédé selon l'une quelconque des revendications précédentes, dans lequel les débits d'alimentation en liquide et en gaz et la pression du gaz d'hydrogénation sont ajustés afin de fournir un rapport liquide/gaz ("rapport L/G") d'au moins 0,45:10 et de préférence d'au moins 0,6:10.

6. Procédé selon la revendication 5, dans lequel les débits d'alimentation en liquide et en gaz et la pression du gaz d'hydrogénation sont ajustés afin de fournir un rapport liquide/gaz qui n'est pas supérieur à 3,5:10, de préférence pas supérieur à 1,5:10.

7. Procédé selon l'une quelconque des revendications précédentes, dans lequel on introduit du gaz supplémentaire le long du réacteur au niveau d'un ou plusieurs points d'entrée.

8. Procédé selon l'une quelconque des revendications précédentes, dans lequel le gaz contenant de l'hydrogène est un mélange d'hydrogène et d'un gaz inerte, tel que l'azote, un gaz rare, le dioxyde de carbone ou un gaz fluoré.

9. Procédé selon l'une quelconque des revendications précédentes, dans lequel l'étape d'hydrogénation est effectuée à une température dans la plage d'environ 20 à 100°C.

10. Procédé selon l'une quelconque des revendications précédentes, dans lequel les granules de catalyseur dans le lit fixe présentent un diamètre de particules de 0,2 à 10 mm, de préférence de 1 à 5 mm.

11. Procédé de fabrication du peroxyde d'hydrogène à l'aide du procédé AO, employant un réacteur à lit fixe et un catalyseur constitué d'un métal catalytique déposé ou absorbé sur un support, dans lequel le support est un support à base de silice/alumine.
